# EUROPÄISCHE PATENTSCHRIFT

(11) **EP 2 996 327 B1**
(45) Veröffentlichungstag und Bekanntmachung des Hinweises auf die Patenterteilung: **06.11.2019**
(21) Anmeldenummer: 15184561.7
(22) Anmeldetag: 09.09.2015
(51) Int. Cl.: H04N 5/232, B60R 1/00, H04N 7/18

(54) **SURROUND-VIEW-SYSTEM FÜR FAHRZEUGE MIT ANBAUGERÄTEN**
SURROUND VIEW SYSTEM FOR VEHICLES WITH ATTACHMENTS
SYSTEME DE VUE ENVIRONNANTE POUR VEHICULES DOTE D'APPAREILS DE MONTAGE

(30) Priorität: 10.09.2014 DE 102014218059
(43) Veröffentlichungstag der Anmeldung: 16.03.2016
(73) Patentinhaber: Continental Automotive GmbH, 30165 Hannover (DE)
(72) Erfinder: von Rosenberg, Harald, 88138 Sigmarszell (DE); Garschke, Thomas, 78250 Tengen (DE)

(56) Entgegenhaltungen:
- EP-A1- 1 522 874
- EP-A1- 2 581 892
- DE-A1-102009 048 380
- US-A1- 2003 052 969

## Beschreibung

### Technisches Gebiet

Die Erfindung betrifft das Anpassen von Surround-View-Systemen bei Anbringen von Anbaugeräten an Fahrzeugen. Insbesondere betrifft die Erfindung ein Surround-View-System, ein Fahrzeug und ein Verfahren.

### Technischer Hintergrund

Moderne Fahrzeuge, insbesondere Nutzfahrzeuge, können mit sogenannten Surround-View-Systemen bzw. Rundumsichtsystemen ausgestattet sein, mit welchen ein vordefinierter Umgebungsbereich um das Fahrzeug, beispielsweise aus der Vogelperspektive, dargestellt wird, um den Fahrer beim Bewegen des Fahrzeuges zu unterstützen. Solche Surround-View-Systeme können eine Mehrzahl von Kameras aufweisen, deren Bilder zu einem Bild in der Vogelperspektive zusammengefügt werden.

Bei vielen Arten von Fahrzeugen, und insbesondere bei Baumaschinen und bei Agrarfahrzeugen, können Anbaugeräte zeitweise an das jeweilige Fahrzeug angebracht werden, um eine bestimmte Arbeiten zu verrichten.

Die EP 1 522 874 A1 zeigt eine Manövrierhilfe für Kraftfahrzeuge, die aufweist eine Kamera zum Erzeugen von Kameradaten einer Umgebung des Fahrzeugs, eine Steuereinrichtung zum Erzeugen eines Bildes aus den Kameradaten und eine Anzeigeeinrichtung zum Anzeigen des Bildes, wobei das Steuergerät dazu ausgeführt ist, das Bild aus den Kameradaten zu erzeugen.

Die EP 2 581 892 A1 zeigt ein Abstandsmeßsystem sowie ein Verfahren zur Abstandsmessung, insbesondere eines Fahrzeugs zu seiner Umgebung. Die US 2003/0052969 A1 zeigt ein Rückfahrkamerasystem für ein Fahrzeug.

Die DE 10 2009 048 380 A1 zeigt ein Einparkhilfesystem bei dem Abstandssensoren eines Fahrzeugs beim Betrieb mit einem Anhänger entweder an diesen versetzt werden, oder durch Abstandssensoren des Anhängers ersetzt werden.

### Zusammenfassung der Erfindung

Es ist eine Aufgabe der Erfindung, ein verbessertes Surround-View-System bereitzustellen, das einen größeren Einsatzbereich aufweist.

Die Aufgabe wird durch die Gegenstände der unabhängigen Ansprüche gelöst. Weiterbildungen und Ausführungsformen sind den abhängigen Ansprüchen, der nachfolgenden Beschreibung und den Figuren zu entnehmen.

Der Erfindung liegt unter anderem die Erkenntnis zu Grunde, dass je nach Typ, Größe und Art des Anbaugerätes ein voreingestellter Sichtbereich eines Surround-View-Systems bei Anbringen des Anbaugerätes an das Fahrzeug nicht mehr passt, wodurch die eigentlich gewünschte Funktionalität und der gewünschte Komfortgewinn des Surround-View-Systems eingeschränkt sein können oder entfallen können.

Ein erster Aspekt der Erfindung betrifft ein Surround-View-System für ein Fahrzeug, welches eine Kamera zum Erzeugen von Kameradaten einer Umgebung des Fahrzeuges, eine Steuereinrichtung zum Erzeugen eines Bildes aus den Kameradaten, eine Anzeigeeinrichtung zum Anzeigen des Bildes und eine Anbaugeräteerkennungsvorrichtung aufweist. Ferner ist die Anbaugeräteerkennungsvorrichtung dazu ausgeführt, bei Anbringen eines Anbaugerätes an das Fahrzeug das Anbaugerät automatisch zu detektieren und eine Abmessung des Anbaugerätes zu bestimmen. Weiterhin ist das Steuergerät dazu ausgeführt, bei Detektion des Anbaugerätes das Bild unter Berücksichtigung der bestimmten Abmessung des Anbaugerätes aus den Kameradaten zu erzeugen.

Mit anderen Worten kann ein Kerngedanke der Erfindung darin gesehen werden, dass ein angezeigter Sichtbereich eines Surround-View-Systems automatisch oder teilautomatisch an Anbaugeräte, die am Fahrzeug angebracht werden, angepasst wird. Dadurch ist der Komfort und Sicherheitsgewinn eines Surround-View-Systems auch im Betrieb mit Anbaugeräten gegeben.

Im Kontext der Erfindung kann unter einem Surround-View-System auch ein Rundumsichtsystem verstanden werden. Das Surround-View-System kann dazu ausgeführt sein, zum Assistieren des Fahrers einen Bereich um das Fahrzeug in einer sogenannten Rundumsicht darzustellen, zum Beispiel in einer Vogelperspektive. Auf diese Weise kann der Fahrer des Fahrzeuges das Fahrzeug präziser in der Umgebung bewegen bzw. rangieren. Unter dem Fahrzeug können verschiedene Arten von Kraftfahrzeugen verstanden werden, beispielsweise ein Personenkraftwagen, ein Lastkraftwagen, ein Omnibus, ein Nutzfahrzeug, ein Landwirtschaftsfahrzeug, ein Baufahrzeug oder auch ein Schiff, wie zum Beispiel eine Fähre.

Das Surround-View-System kann dabei eine oder mehrere Kameras aufweisen, die zum Erzeugen von Kameradaten ausgeführt sind. Im Falle einer Mehrzahl von Kameras kann eine Mehrzahl von Kameradaten erzeugt werden. In diesem Fall kann die Steuereinrichtung zum Erzeugen des Bildes dazu ausgeführt sein, die Mehrzahl von Kameradaten zu einem Bild zusammenzufügen. Unter den Kameradaten können dabei Daten, die von der Kamera aufgenommen werden und eine Bildinformation über die Umgebung des Fahrzeuges enthalten, verstanden werden. Mit anderen Worten können unter den Kameradaten Bilddaten verstanden werden. Die Kamera kann beispielsweise als Digitalkamera ausgeführt sein, welche sichtbares Licht detektieren und aufnehmen kann. Die Kamera kann ferner dazu ausgeführt sein, Daten im Infrarotbereich aufzunehmen.

Unter dem Erzeugen des Bildes aus den Kameradaten kann verstanden werden, dass die Steuereinrichtung die Kameradaten verwendet, um ein Bild zu generieren. Beispielsweise kann die Steuereinrichtung dazu ausgeführt sein, im Falle, dass eine Mehrzahl von Kameras im Surround-View-System enthalten sind, die Mehrzahl von Kameradaten zu einem Bild zusammenzufügen. Dabei ist das Zusammenfügen mehrerer Kameradaten zu einem Bild auch unter dem Begriff des Stitchings bekannt. Ferner kann die Steuereinrichtung dazu ausgeführt sein, eine bestimmte Perspektive des Bildes zu berechnen oder zu erzeugen, zum Beispiel eine Vogelperspektive. Es sind jedoch auch andere Perspektiven möglich, zum Beispiel dreidimensionale Ansichten von schräg vorne oder schräg hinten. Mit anderen Worten kann die Steuereinrichtung dazu ausgeführt sein, eine Rundumsicht des Fahrzeuges zu erzeugen. Dieses Bild kann auf der Anzeigeeinrichtung des Surround-View-Systems angezeigt werden, um den Fahrer des Fahrzeuges zu unterstützen. Dabei kann die Anzeigeeinrichtung ein Bildschirm bzw. ein Display sein.

Die Anbaugeräteerkennungsvorrichtung kann als zusätzliche Vorrichtung in dem Surround-View-System bereitgestellt sein. Ferner kann die Anbaugeräteerkennungsvorrichtung auch in der Steuereinrichtung des Surround-View-Systems integriert sein. Unter dem Detektieren des Anbaugerätes durch die Anbaugeräteerkennungsvorrichtung kann verstanden werden, dass die Anbaugeräteerkennungsvorrichtung das Anbringen des Anbaugerätes erkennt und/oder das Anbaugerät identifiziert. Die Abmessung des Anbaugerätes, die durch die Anbaugeräteerkennungsvorrichtung bestimmt wird, kann eine oder mehrere Abmessungen des Anbaugerätes umfassen. Beispielsweise kann die Abmessung des Anbaugerätes eine Länge des Anbaugerätes sein. Die Abmessung des Anbaugerätes kann jedoch auch die Höhe, die Breite und die Länge des Anbaugerätes umfassen. Ferner kann unter der Abmessung des Anbaugerätes eine Geometrie des Anbaugerätes verstanden werden. Beispielsweise kann die Anbaugeräteerkennungsvorrichtung auch dazu ausgeführt sein, ein zweidimensionales oder dreidimensionales Modell des Anbaugerätes zu bestimmen. Das Detektieren sowie das Bestimmen der Abmessung des Anbaugerätes können dabei auf unterschiedliche Weisen erfolgen. Beispielsweise kann das Anbaugerät auf optische Weise detektiert werden und die Abmessung des Anbaugerätes auf optische Weise bestimmt werden, wie es im Kontext der Erfindung beschrieben ist. Das Anbaugerät kann jedoch auch optisch detektiert und identifiziert werden, wobei die Abmessung des Anbaugerätes aus einer Speichereinheit ausgelesen wird. Ferner kann das Anbaugerät auch über eine zwischen dem Fahrzeug und dem Anbaugerät herstellbare Datenverbindung detektiert und/oder identifiziert werden. In diesem Fall kann das Anbaugerät seine Abmessung über die Datenverbindung an die Anbaugeräteerkennungsvorrichtung übertragen. Alternativ kann die Anbaugeräteerkennungsvorrichtung dazu ausgeführt sein, die Abmessung des Anbaugerätes aus einer Speichereinheit auszulesen.

Die Anbaugeräteerkennungsvorrichtung kann ferner dazu ausgeführt sein, die bestimmte Abmessung des Anbaugerätes an das Steuergerät zu übertragen. Das Steuergerät kann dann bei Detektion des Anbaugerätes die bestimmte Abmessung des Anbaugerätes berücksichtigen, um das Bild aus den Kameradaten zu erzeugen. Mit anderen Worten kann das Steuergerät das Bild derart erzeugen, dass ein ausreichend großer Ausschnitt der Umgebung des Fahrzeuges dargestellt wird, wenn das Anbaugerät an das Fahrzeug angebracht ist. Beispielsweise kann das Steuergerät einen vorderen Randabstand, einen linken Randabstand, einen rechten Randabstand und/oder einen hinteren Randabstand des Bildes an die Abmessung des Anbaugerätes anpassen. Hierbei kann unter den Randabständen der Abstand zwischen Fahrzeug und Bildrand verstanden werden. Beispielsweise können die Randabstände derart gewählt sein, dass ein Umgebungsbereich von ca. 1 bis 4 Meter um das Fahrzeug dargestellt wird. In dreidimensionalen Ansichten kann der dargestellte Umgebungsbereich auch größer sein.

Auf diese Weise kann das Surround-View-System auch verwendet werden, wenn ein Anbaugerät an das Fahrzeug angebracht wird. Auf diese Weise wird der Einsatzbereich des Surround-View-Systems vergrößert, so dass das Surround-View-System insgesamt verbessert wird.

Gemäß einer beispielhaften Ausführungsform der Erfindung ist die Steuereinrichtung dazu ausgeführt, zum Erzeugen des Bildes einen Sichtbereich des Bildes unter Berücksichtigung der Abmessung des Anbaugerätes anzupassen.

Mit anderen Worten kann die Steuereinrichtung dazu ausgeführt sein, einen Ausschnitt der Umgebung, der im Bild dargestellt ist, an die Abmessung des Anbaugerätes anzupassen. Beispielsweise kann das Bild in der Vogelperspektive dargestellt sein, wobei ein Modell des Fahrzeuges in der Mitte des Bildes dargestellt sein kann. Der Sichtbereich des Bildes kann nun durch einen vorderen Randabstand, einen linken Randabstand, einen rechten Randabstand und einen hinteren Randabstand definiert sein, welche jeweils den Abstand zwischen dem Modell des Fahrzeuges und dem Bildrand definieren. Diese Randabstände können je nach Abmessung des Anbaugerätes angepasst werden, so dass ein ausreichend großer Ausschnitt der Umgebung dargestellt wird.

Gemäß einer weiteren beispielhaften Ausführungsform der Erfindung ist die Steuereinrichtung dazu ausgeführt, ein Modell des Fahrzeuges in das Bild einzufügen. Ferner ist die Steuereinrichtung dazu ausgeführt, bei Detektion des Anbaugerätes ein Modell des Anbaugerätes unter Berücksichtigung der Abmessung des Anbaugerätes in das Bild einzufügen.

Dabei kann unter dem Modell ein zweidimensionales oder dreidimensionales Modell des Fahrzeuges bzw. des Anbaugerätes verstanden werden, das in dem Bild dargestellt bzw. generiert wird. Auf diese Weise kann das Fahrzeug zusammen mit dem Anbaugerät präziser in der Umgebung bewegt bzw. rangiert werden.

Gemäß einer weiteren beispielhaften Ausführungsform der Erfindung weist die Anbaugeräteerkennungsvorrichtung eine Speichereinrichtung auf, in der die Abmessung des Anbaugerätes gespeichert ist. Die Anbaugeräteerkennungsvorrichtung ist ferner dazu ausgeführt, bei Detektion des Anbaugerätes die Abmessung des Anbaugerätes aus der Speichereinrichtung auszulesen.

Mit anderen Worten kann die Anbaugeräteerkennungsvorrichtung dazu ausgeführt sein, die Abmessung des Anbaugerätes zu bestimmen, indem die Abmessung aus der Speichereinrichtung ausgelesen wird. Dabei kann die Speichereinrichtung beispielsweise eine Datenbank aufweisen, in der die Abmessung des Anbaugerätes hinterlegt ist. Auf diese Weise kann eine genaue Abmessung des Anbaugerätes in der Speichereinrichtung gespeichert sein, so dass das Bild präzise an das Anbaugerät angepasst werden kann.

Gemäß einer weiteren beispielhaften Ausführungsform der Erfindung ist in der Speichereinrichtung jeweils eine Abmessung von einer Mehrzahl von unterschiedlichen Anbaugeräten abgespeichert. Dabei ist die Anbaugeräteerkennungsvorrichtung dazu ausgeführt, eine Identität des Anbaugerätes über eine zwischen dem Fahrzeug und dem Anbaugerät herstellbare Datenverbindung zu bestimmen. Die Anbaugeräteerkennungsvorrichtung ist außerdem dazu ausgeführt, mittels der bestimmten Identität des Anbaugerätes die Abmessung des Anbaugerätes aus der Speichereinrichtung auszulesen.

Mit anderen Worten kann für jedes Anbaugerät aus einer Mehrzahl von Anbaugeräten jeweils eine Abmessung in der Speichereinrichtung bzw. in einer Datenbank der Speichereinrichtung abgespeichert sein. Die Anbaugeräteerkennungsvorrichtung kann dazu ausgeführt sein, die bestimmte Identität des Anbaugerätes zu verwenden, um die Abmessung des Anbaugerätes in der Speichereinheit aus der Vielzahl von gespeicherten Abmessungen herauszusuchen. Die Datenverbindung kann dabei ein CAN-Bus sein.

Auf diese Weise kann die Anbaugeräteerkennungsvorrichtung dazu ausgeführt sein, unterschiedliche Anbaugeräte zu erkennen und deren Abmessung zu bestimmen. Mit anderen Worten kann die Identität des Anbaugerätes herangezogen werden, um anhand der Speichereinrichtung bzw. der Datenbank zu bestimmen, welche Abmessung das Anbaugerät aufweist, damit das Bild bzw. der Sichtbereich des Surround-View-Systems zielgerichtet angepasst bzw. erweitert werden kann.

Gemäß einer weiteren beispielhaften Ausführungsform der Erfindung ist die Anbaugeräteerkennungsvorrichtung dazu ausgeführt, das Anbaugerät durch Erkennen von sich mit dem Fahrzeug mitbewegenden Objekten mittels der Kamera zu detektieren und dessen Abmessung zu bestimmen.

Es können beispielsweise Ecken oder Kanten des Anbaugerätes über die Kamera erkannt werden. Mit den Positionen der Ecken bzw. Kanten des Anbaugerätes kann dessen Abmessung bestimmt werden. Dies kann beispielsweise über ein optisches Verfahren erfolgen, bei welchem der optische Fluss in den von der Kamera aufgenommenen Kameradaten analysiert wird. Mit anderen Worten kann beispielsweise im Roh-Kamerabild nach Objekten gesucht werden, die nahe am Fahrzeug sind und die sich während der Fahrzeugbewegung mit diesen mitbewegen. Hierfür kann beispielsweise ein Verfahren auf Basis des optischen Flusses herangezogen werden. Ferner kann die Abbildungsfunktion der Kameralinsen bekannt sein, wodurch in einem nächsten Schritt ein Korrekturwert für den angezeigten Sichtbereich bestimmt und/oder berechnet werden kann. Dies kann beispielsweise den vorderen, linken, rechten und/oder hinteren Randabstand des Bildes betreffen.

Auf diese Weise ist es nicht erforderlich, dass das Anbaugerät in einer Datenbank hinterlegt ist. Ferner kann auf diese Weise das Surround-View-System auch auf ein neu hergestelltes Anbaugerät, für welches es noch keine Abmessung in der Speichereinheit gibt, angepasst werden.

Gemäß einer weiteren beispielhaften Ausführungsform der Erfindung umfasst das Surround-View-System eine Mehrzahl von Kameras zum Erzeugen einer Mehrzahl von Kameradaten einer Umgebung des Fahrzeuges. Dabei ist die Steuereinrichtung dazu ausgeführt, das Bild aus der Mehrzahl von Kameradaten zu erzeugen und bei Detektion des Anbaugerätes eine geringere Anzahl von Kameras aus der Mehrzahl von Kameras auszuwählen.

Beispielsweise kann das Surround-System eine niedrig montierte Frontkamera, eine höher montierte Frontkamera, zwei Seitenkameras sowie eine auf der Rückseite des Fahrzeuges montierte Kamera aufweisen. Im Falle, dass ein Anbaugerät an der Front des Fahrzeuges angebracht wird, kann die niedrige Frontkamera verdeckt werden, so dass die Anbaugeräteerkennungsvorrichtung nur die höher montierte Frontkamera, die Seitenkameras und die hintere zum Erzeugen des Bildes Kamera auswählt. Auf diese Weise kann ein Surround-View-System mit mehreren Kameras individuell an unterschiedliche Anbaugeräte angepasst werden.

Gemäß einer weiteren beispielhaften Ausführungsform der Erfindung ist die Anbaugeräteerkennungsvorrichtung dazu ausgeführt, ein Entfernen des Anbaugerätes zu detektieren und bei Entfernen des Anbaugerätes das Bild ohne die Abmessung des Anbaugerätes aus den Kameradaten zu erzeugen.

Mit anderen Worten kann die Anbaugeräteerkennungsvorrichtung dazu ausgeführt sein, das Entfernen des Anbaugerätes der Steuereinrichtung mitzuteilen, so dass die Steuereinrichtung das Bild in der Normaldarstellung ohne Anbaugerät erzeugt. Das heißt, dass der Sichtbereich wieder an das Fahrzeug ohne Anbaugeräte angepasst werden kann.

Ein weiterer Aspekt der Erfindung betrifft ein Fahrzeug, welches ein im Kontext der Erfindung beschriebenes Surround-View-System aufweist.

Dabei kann das Fahrzeug unterschiedliche Kraftfahrzeuge betreffen. Beispielsweise kann das Fahrzeug ein Personenkraftwagen, ein Lastkraftwagen, ein Omnibus, ein Nutzfahrzeug, ein Landwirtschaftsfahrzeug, ein Baufahrzeug oder auch ein Schiff, wie zum Beispiel eine Fähre, sein.

Ein weiterer Aspekt der Erfindung betrifft ein Verfahren zum Anzeigen eines Bildes einer Umgebung eines Fahrzeuges mit einem angebrachten Anbaugerät. Das Verfahren enthält dabei den Schritt des automatischen Detektierens und Bestimmens einer Abmessung des Anbaugerätes bei Anbringen des Anbaugerätes an das Fahrzeug. Ferner umfasst das Verfahren die Schritte des Erzeugens von Kameradaten der Umgebung des Fahrzeuges sowie des Erzeugens eines Bildes unter Berücksichtigung der Abmessung des Anbaugerätes aus den Kameradaten, wenn das Anbaugerät detektiert wurde. Außerdem umfasst das Verfahren den Schritt des Anzeigens des Bildes.

Dabei kann das Verfahren von einem im Kontext der Erfindung beschriebenen Surround-View-System durchgeführt werden. Die Schritte des Verfahrens können dabei in der genannten Reihenfolge, in einer anderen Reihenfolge und/oder zum Teil auch parallel zueinander durchgeführt werden.

Ein weiterer Aspekt der Erfindung betrifft ein Computerprogrammprodukt, das, wenn es von einer Recheneinheit ausgeführt wird, die Recheneinheit anleitet, ein im Kontext der Erfindung beschriebenes Verfahren durchzuführen.

Ferner betrifft ein Aspekt der Erfindung ein computerlesbares Medium, auf dem ein Computerprogrammprodukt gespeichert ist, das, wenn es von einer Recheneinheit ausgeführt wird, die Recheneinheit anleitet, ein im Kontext der Erfindung beschriebenes Verfahren durchzuführen.

Weitere Merkmale, Vorteile und Anwendungsmöglichkeiten der Erfindung ergeben sich aus der nachfolgenden Beschreibung der Ausführungsbeispiele und Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen.

### Kurze Beschreibung der Figuren

- Fig. 1: zeigt ein Fahrzeug mit einem Surround-View-System gemäß einem Ausführungsbeispiel der Erfindung.
- Fig. 2: zeigt ein in einer Anzeigeeinrichtung eines Surround-View-Systems gemäß einem Ausführungsbeispiel der Erfindung dargestelltes Bild.
- Fig. 3: zeigt ein in einer Anzeigeeinrichtung eines Surround-View-System gemäß einem Ausführungsbeispiel der Erfindung dargestelltes Bild.
- Fig. 4: zeigt ein in einer Anzeigeeinrichtung eines Surround-View-Systems gemäß einem Ausführungsbeispiel der Erfindung dargestelltes Bild.
- Fig. 5: zeigt ein Flussdiagramm für ein Verfahren gemäß einem Ausführungsbeispiel der Erfindung.
- Fig. 6: zeigt ein Flussdiagramm für ein Verfahren gemäß einem Ausführungsbeispiel der Erfindung.

Die Figuren sind schematisch und nicht maßstabsgetreu dargestellt. Sind in der nachfolgenden Beschreibung in verschiedenen Figuren die gleichen Bezugszeichen angegeben, so bezeichnen diese gleiche oder einander entsprechende Elemente. Gleiche oder einander entsprechende Elemente können aber auch mit unterschiedlichen Bezugszeichen bezeichnet sein.

### Detaillierte Beschreibung von Ausführungsbeispielen

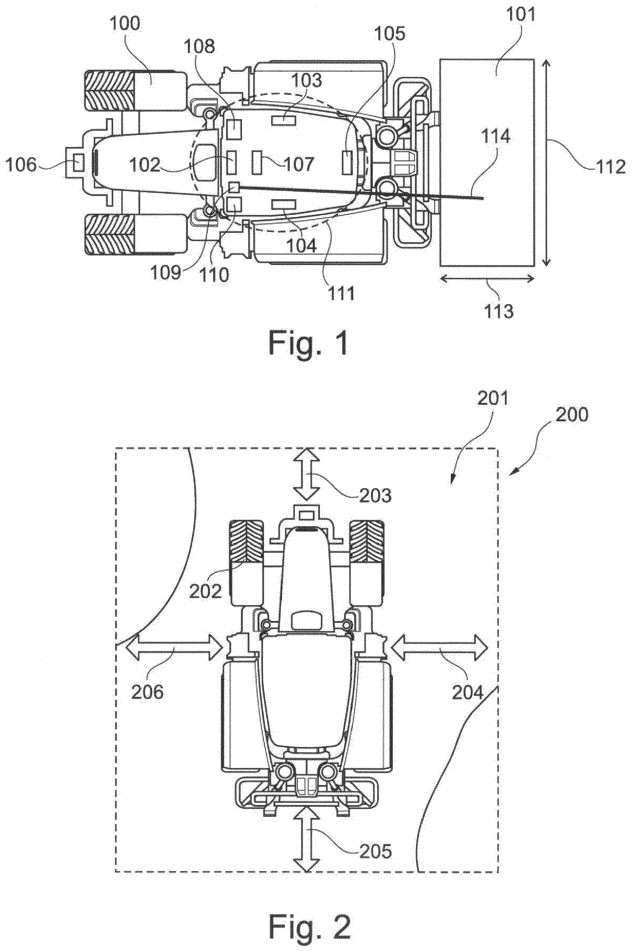

In Fig. 1 ist ein Fahrzeug 100 gemäß einem Ausführungsbeispiel der Erfindung gezeigt, welches ein im Kontext der Erfindung beschriebenes Surround-View-System 111 umfasst. Das Fahrzeug 100 ist in diesem Ausführungsbeispiel als landwirtschaftliches Nutzfahrzeug bzw. als Traktor ausgeführt und weist ein am Heck angebrachtes Anbaugerät 101 auf. Das Anbaugerät 101 kann beispielsweise ein heckseitig montierter Pflug sein.

Das Surround-View-System 111 umfasst mehrere Kameras, beispielsweise vier höher angeordnete Kameras 102, 103, 104 und 105 sowie eine niedrig angeordnete Frontkamera 106. Die Kameras 102 bis 106 sind jeweils dazu ausgeführt, Kameradaten zu erzeugen, so dass insgesamt eine Mehrzahl von Kameradaten erzeugt wird. Aus dieser Mehrzahl von Kameradaten erzeugt die Steuereinrichtung 108 des Surround-View-Systems 111 ein Bild, welches auf der Anzeigeeinrichtung 107 dargestellt wird und beispielsweise in den Fig. 2, 3 und 4 gezeigt ist. Dazu ist die Steuereinrichtung 108 dazu ausgeführt, die Kameradaten der verschiedenen Kameras 102 bis 106 zusammenzufügen, so dass ein Bild in der Vogelperspektive erzeugt wird, welches die Umgebung des Fahrzeuges 100 darstellt.

Das Surround-View-System 111 umfasst ferner eine Anbaugeräteerkennungsvorrichtung 109, welche eine Speichereinheit 110 aufweist. Die Anbaugeräteerkennungsvorrichtung 109 ist dazu ausgeführt, zu detektieren, ob ein Anbaugerät 101 an dem Fahrzeug 100 angebracht ist und bei Detektion des Anbaugerätes 101 eine Abmessung des Anbaugerätes 101 zu bestimmen. Die Abmessung des Anbaugerätes kann beispielsweise eine Breite 112 und/oder eine Länge 113 umfassen. Ferner kann die Abmessung auch eine Höhe des Anbaugerätes 101 umfassen, die in diesem Ausführungsbeispiel nicht dargestellt ist. Die Anbaugeräteerkennungsvorrichtung 109 ist nun dazu ausgeführt, die bestimmte Abmessung 112, 113 des Anbaugerätes 109 an die Steuereinrichtung 108 zu übertragen, so dass die Steuereinrichtung 108 das erzeugte Bild von der Umgebung des Fahrzeuges 100 unter Berücksichtigung des Anbaugerätes 101 bzw. der Abmessung des Anbaugerätes 112 und 113 erzeugen bzw. anpassen kann. Beispielsweise kann die Steuereinrichtung 108 dazu ausgeführt sein, einen Bildbereich des in der Anzeigeeinrichtung 107 dargestellten Bildes derart anzupassen, dass der gezeigte Ausschnitt der Fahrzeugumgebung das angebrachte Anbaugerät 101 berücksichtigt. Das Detektieren des Anbaugerätes 101 und/oder das Bestimmen der Abmessung 112, 113 des Anbaugerätes 101 durch die Anbaugeräteerkennungsvorrichtung 109 kann auf unterschiedliche Weisen erfolgen. Beispielsweise kann die Anbaugeräteerkennungsvorrichtung 109 das Anbaugerät 101 auf optische Weise detektieren und dessen Abmessung 112, 113 bestimmen. Ferner ist die Anbaugeräteerkennungsvorrichtung 109 dazu ausgeführt, das Anbaugerät 101 über eine zwischen dem Fahrzeug 109 und dem Anbaugerät 101 bestehende Datenverbindung 114 bzw. einen CAN-Bus zu detektieren bzw. dessen Identität zu bestimmen. Mittels der bestimmten Identität kann die Anbaugeräteerkennungsvorrichtung die Abmessung 112, 113 aus einer in der Speichereinrichtung 110 des Surround-View-Systems 111 gespeicherten Datenbank auslesen. Sollte keine Datenverbindung 114 zwischen dem Fahrzeug 100 und dem Anbaugerät 101 vorliegen, so kann die Anbaugeräteerkennungsvorrichtung 109 das Anbaugerät 101 optisch detektieren sowie dessen Abmessung 112, 113 optisch bestimmen, indem Objekte, die sich mit dem Fahrzeug 100 mitbewegen, mittels der Kamera 105 detektiert werden. Beispielsweise können die Ecken bzw. Kanten des Anbaugerätes 101, die sich mit dem Fahrzeug 100 mitbewegen, erkannt werden und basierend auf den erkannten Ecken bzw. Kanten die Abmessung des Anbaugerätes bestimmt werden.

In Fig. 2 ist ein Bild 200 gezeigt, das von einer Steuereinrichtung eines Surround-View-Systems gemäß einem Ausführungsbeispiel der Erfindung erzeugt wurde. In dem Bild 200 sind ein 3D-Modell des Fahrzeuges 202 sowie ein Ausschnitt der Umgebung des Fahrzeuges 201 in der Vogelperspektive dargestellt. Die Größe des Ausschnittes der dargestellten Umgebung 201 ist durch den vorderen Randabstand 203, den rechten Randabstand 204, den hinteren Randabstand 205 und den linken Randabstand 206 definiert. In Fig. 2 sind dabei die Randabstände 203 bis 206 an die Dimension des Fahrzeuges 202 ohne Anbaugerät angepasst.

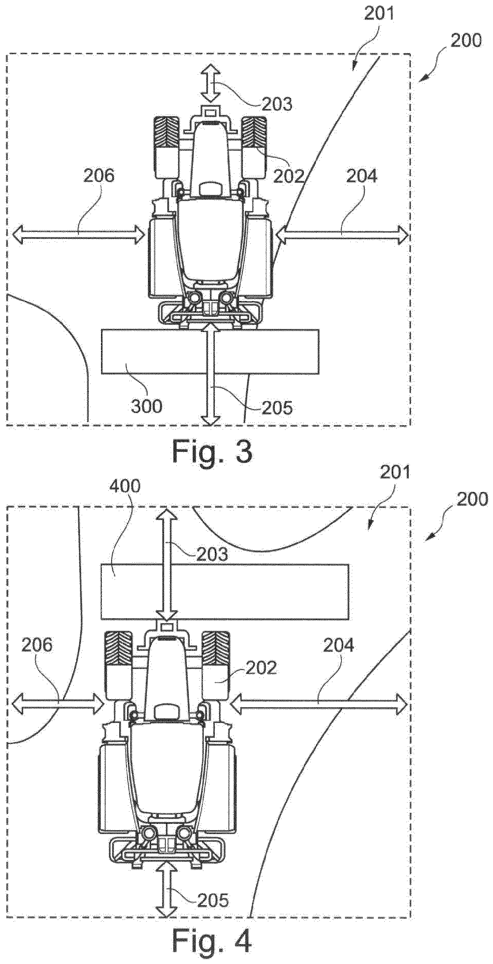

In Fig. 3 ist ebenfalls ein Bild 200 dargestellt, welches von einer Steuereinrichtung eines Surround-View-Systems gemäß einem Ausführungsbeispiel der Erfindung erzeugt wird. Gemäß diesem Ausführungsbeispiel ist ein Anbaugerät am Heck des Fahrzeuges angebracht, so dass die Anbaugeräteerkennungsvorrichtung des Fahrzeuges die Abmessung des Anbaugerätes bestimmt und die Steuereinrichtung das Bild unter Berücksichtigung des Anbaugerätes erzeugt. Im Bild ist wieder die Umgebung des Fahrzeuges 201 dargestellt. Ferner ist in der Mitte des Bildes ein Modell des Fahrzeuges 202 dargestellt, wobei auch ein Modell des Anbaugerätes 302 im Bild 200 enthalten ist. Der rechte, hintere und linke Randabstand 204, 205 und 206 sind außerdem jeweils derart angepasst, dass ein ausreichend großer Ausschnitt der Fahrzeugumgebung um das Fahrzeug und um das Anbaugerät herum im Bild 200 dargestellt ist.

Um dieses Bild 200 zu erzeugen, ist die Steuereinrichtung dazu ausgeführt, das Modell des Fahrzeuges 202 herunter zu skalieren und das Modell des Anbaugerätes 300 im Bild 200 einzufügen. Ferner werden die seitlichen Randabstände 204 und 206 sowie der hintere Randabstand 205 vergrößert, da das Anbaugerät die Gesamtbreite sowie die Gesamtlänge des Fahrzeuges vergrößert. Auf diese Weise wird der Sichtbereich an das Anbaugerät bzw. an die Abmessung des Anbaugerätes angepasst.

In Fig. 4 ist ebenfalls ein Bild 200 dargestellt, das von einer Steuereinrichtung eines Surround-View-Systems erzeugt ist. Dabei ist in diesem Ausführungsbeispiel ein Anbaugerät an der Front des Fahrzeuges angebracht, wobei das Anbaugerät über die rechte Seite des Fahrzeuges hinausragt. Analog zu Fig. 3 ist die Steuereinrichtung in diesem Ausführungsbeispiel dazu ausgeführt, das Modell des Fahrzeuges 202 herunter zu skalieren und den Sichtbereich derart anzupassen, dass das Fahrzeug 202 nicht mehr zentriert ist. Ferner wird ein Modell 400 des Anbaugerätes in das Bild eingefügt und es werden der vordere Randabstand 203 und der rechte Randabstand 204 angepasst, so dass ein ausreichend großer Ausschnitt der Umgebung des Fahrzeuges dargestellt ist.

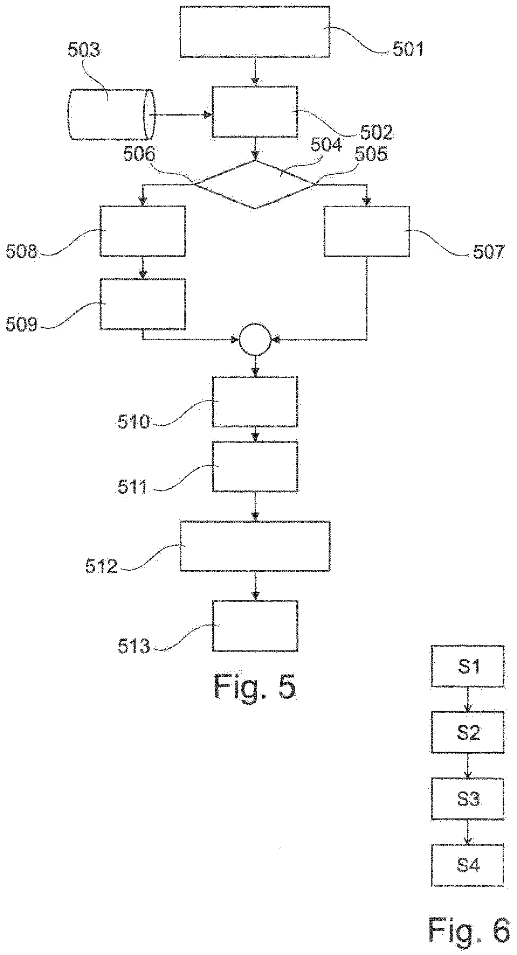

In Fig. 5 ist ein Flussdiagramm für ein Verfahren zum Anpassen des Surround-View-Systems an ein angebrachtes Anbaugerät gemäß einem Ausführungsbeispiel der Erfindung dargestellt. Im Schritt 501 erfolgt das Anbringen des Anbaugerätes an das Fahrzeug, wobei das Anbringen entweder durch einen Benutzer oder automatisch durch eine elektrische oder mechanische Anbringungsvorrichtung erfolgt. Im nächsten Schritt 502 erfolgt das Identifizieren des Anbaugerätes über eine Datenverbindung (zum Beispiel über einen CAN-Bus). Im Schritt 504 wird überprüft, ob das Anbaugerät eine Schnittstelle für die Datenverbindung bereitstellt und ob die Abmessungen des Anbaugerätes in einer Datenbank 503 abgespeichert sind. Die Abzweigung 505 markiert den nächsten Schritt, falls beide Bedingungen erfüllt sind. In diesem Fall erfolgt der Schritt 507, indem die Abmessung bzw. die Dimension des Anbaugerätes aus der Datenbank 503 ausgelesen und verwendet werden. Die Abzweigung 506 beschreibt den Fall, dass die Bedingungen 504 nicht erfüllt sind. In diesem Fall erfolgt im Schritt 508 das Identifizieren des Anbaugerätes durch eine optische Kamera mittels eines optischen Verfahrens. Im Schritt 509 erfolgt das Bestimmen der Abmessung des Anbaugerätes bzw. der Dimension des Anbaugerätes durch optische Messverfahren. Im Schritt 510 treffen die beiden Abzweigungen wieder zusammen, in welchem das automatische Berechnen eines neuen Sichtbereichs bzw. der neuen Randbereiche erfolgt. Anschließend erfolgt im Schritt 511 das Auswählen einer geringeren Anzahl von Kameras aus der Mehrzahl von Kameras. Zum Beispiel kann das Fahrzeug zwei Frontkameras aufweisen, wobei die eine Kamera niedrig und die andere Kamera höher montiert sind. In diesem Fall wird die niedrige Frontkamera nicht ausgewählt, wenn das Anbaugerät angebracht und detektiert wird. Als nächstes erfolgen im Schritt 512 das Skalieren des Modells des Fahrzeuges in dem Bild der Rundumsicht sowie das Hinzufügen des Modells des Anbaugerätes zum Modell des Fahrzeuges. Anschließend erfolgt im Schritt 513 das Aktualisieren des angezeigten Bildes in der Anzeigeeinheit des Surround-View-Systems unter Berücksichtigung der neu berechneten Parameter.

In Fig. 6 ist ein Flussdiagramm für ein Verfahren zum Anzeigen eines Bildes einer Umgebung eines Fahrzeuges mit einem angebrachten Anbaugerät gemäß einem Ausführungsbeispiel der Erfindung dargestellt. Das Verfahren weist dabei den Schritt S1 des automatischen Detektierens und Bestimmens einer Abmessung des Anbaugerätes bei Anbringen des Anbaugerätes an das Fahrzeug auf. Ferner umfasst das Verfahren den Schritt S2 des Erzeugens von Kameradaten der Umgebung des Fahrzeuges und den Schritt S3 des Erzeugens eines Bildes unter Berücksichtigung der Abmessung des Anbaugerätes aus den Kameradaten, wenn das Anbaugerät detektiert wurde. Anschließend erfolgt der Schritt S4 des Anzeigens des Bildes.

Ergänzend sei darauf hinzuweisen, dass "umfassend" oder "aufweisend" keine anderen Elemente ausschließt und "ein" oder "einer" keine Vielzahl ausschließt. Ferner sei darauf hingewiesen, dass Merkmale, die mit Verweis auf eines der obigen Ausführungsbeispiele oder Ausführungsformen beschrieben worden sind, auch in Kombination mit anderen Merkmalen anderer oben beschriebener Ausführungsbeispiele oder Ausführungsformen verwendet werden können. Bezugszeichen in den Ansprüchen sind nicht als Einschränkungen anzusehen.

## Patentansprüche

1. Surround-View-System (111) für ein Fahrzeug (100), das Surround-View-System aufweisend:
eine Kamera (102, 103, 104, 105, 106) zum Erzeugen von Kameradaten einer Umgebung des Fahrzeuges;
eine Steuereinrichtung (108) zum Erzeugen eines Bildes aus den Kameradaten;
eine Anzeigeeinrichtung (107) zum Anzeigen des Bildes;
wobei die Steuereinrichtung dazu ausgeführt ist, das Bild aus den Kameradaten zu erzeugen, **dadurch gekennzeichnet, daß** das Surround-View-System (111) weiterhin aufweist:
eine Anbaugeräteerkennungsvorrichtung (109);
wobei die Anbaugeräteerkennungsvorrichtung dazu ausgeführt ist, bei Anbringen eines Anbaugerätes (101) an das Fahrzeug das Anbaugerät automatisch zu detektieren und eine Abmessung (112, 113) des Anbaugerätes zu bestimmen;
und dass die Steuereinrichtung ausgeführt ist, zum Erzeugen des Bildes einen Sichtbereich des Bildes bei der Detektion des Anbaugerätes unter Berücksichtigung der bestimmten Abmessung (112, 113) des Anbaugerätes (101) anzupassen.

2. Surround-View-System (111) nach Anspruch 1,
wobei die Steuereinrichtung (108) dazu ausgeführt ist, ein Modell (202) des Fahrzeuges in das Bild einzufügen; und
wobei die Steuereinrichtung dazu ausgeführt ist, bei Detektion des Anbaugerätes ein Modell (300, 400) des Anbaugerätes unter Berücksichtigung der Abmessung des Anbaugerätes in das Bild einzufügen.

3. Surround-View-System (111) nach einem der vorangehenden Ansprüche,
wobei die Anbaugeräteerkennungsvorrichtung (109) eine Speichereinrichtung (110) aufweist, in der die Abmessung des Anbaugerätes gespeichert ist; und
wobei die Anbaugeräteerkennungsvorrichtung (109) dazu ausgeführt ist, bei Detektion des Anbaugerätes die Abmessung des Anbaugerätes aus der Speichereinrichtung (110) auszulesen.

4. Surround-View-System (111) nach Anspruch 3,
wobei in der Speichereinrichtung (110) jeweils eine Abmessung von einer Mehrzahl von unterschiedlichen Anbaugeräten abgespeichert ist;
wobei die Anbaugeräteerkennungsvorrichtung (109) dazu ausgeführt ist, eine Identität des Anbaugerätes über eine zwischen dem Fahrzeug und dem Anbaugerät herstellbare Datenverbindung (114) zu bestimmen; und
wobei die Anbaugeräteerkennungsvorrichtung (109) dazu ausgeführt ist, mittels der bestimmten Identität des Anbaugerätes die Abmessung des Anbaugerätes aus der Speichereinrichtung (110) auszulesen.

5. Surround-View-System (111) nach einem der vorangehenden Ansprüche, wobei die Anbaugeräteerkennungsvorrichtung (109) dazu ausgeführt ist, das Anbaugerät durch Erkennen von sich mit dem Fahrzeug mitbewegenden Objekten mittels der Kamera (105) zu detektieren und dessen Abmessung (112, 113) zu bestimmen.

6. Surround-View-System (111) nach einem der vorangehenden Ansprüche,
wobei das Surround-View-System eine Mehrzahl von Kameras (102, 103, 104, 105, 106) zum Erzeugen einer Mehrzahl von Kameradaten einer Umgebung des Fahrzeuges (201) aufweist;
wobei die Steuereinrichtung dazu ausgeführt ist, das Bild aus der Mehrzahl von Kameradaten zu erzeugen; und wobei die Anbaugeräteerkennungsvorrichtung (109) dazu ausgeführt ist, bei Detektion des Anbaugerätes eine geringere Anzahl von Kameras (102, 103, 104, 105) aus der Mehrzahl von Kameras auszuwählen.

7. Surround-View-System (111) nach einem der vorangehenden Ansprüche,
wobei die Anbaugeräteerkennungsvorrichtung (109) dazu ausgeführt ist, ein Entfernen des Anbaugerätes (101) zu detektieren; und
wobei die Steuereinrichtung (108) dazu ausgeführt ist, bei Entfernen des Anbaugerätes das Bild ohne die Abmessung des Anbaugerätes aus den Kameradaten zu erzeugen.

8. Fahrzeug (100), aufweisend ein Surround-View-System (111) nach einem der vorangehenden Ansprüche.

9. Verfahren zum Anzeigen eines Bildes einer Umgebung eines Fahrzeuges, das Verfahren aufweisend die Schritte:
Erzeugen von Kameradaten der Umgebung des Fahrzeuges (S2) ;
Erzeugen eines Bildes aus den Kameradaten; und
Anzeigen des Bildes (S4), **gekennzeichnet durch** die weiteren Schritte:
Automatisches Detektieren und Bestimmen einer Abmessung eines Anbaugerätes bei Anbringen des Anbaugerätes an das Fahrzeug (S1);
Anpassen des Sichtbereich des Bildes unter Berücksichtigung der Abmessung (112,113) des detektierten Anbaugerätes (101).

## Claims

1. Surround-view system (111) for a vehicle (100), the surround-view system including:
a camera (102, 103, 104, 105, 106) for producing camera data of an environment of the vehicle;
a control device (108) for producing an image from the camera data;
a display device (107) for displaying the image;
wherein the control device is embodied to produce the image from the camera data, **characterized in that**
the surround-view system (111) furthermore includes:
an attachment unit recognition apparatus (109);
wherein the attachment unit recognition apparatus is embodied to automatically detect, upon mounting of an attachment unit (101) to the vehicle, said attachment unit and to determine a dimension (112, 113) of the attachment unit;
and **in that** the control device is embodied to adapt, in the case of the detection of the attachment unit, a field of view of the image taking into consideration the determined dimension (112, 113) of the attachment unit (101) for producing the image.

2. Surround-view system (111) according to Claim 1,
wherein the control device (108) is embodied to insert a model (202) of the vehicle into the image; and
wherein the control device is embodied to insert, upon detection of the attachment unit, a model (300, 400) of the attachment unit into the image taking into consideration the dimension of the attachment unit.

3. Surround-view system (111) according to one of the preceding claims,
wherein the attachment unit recognition apparatus (109) includes a memory device (110), in which the dimension of the attachment unit is stored; and
wherein the attachment unit recognition apparatus (109) is embodied to read, upon detection of the attachment unit, the dimension of the attachment unit from the memory device (110).

4. Surround-view system (111) according to Claim 3, wherein in each case one dimension of a plurality of different attachment units is stored in the memory device (110);
wherein the attachment unit recognition apparatus (109) is embodied to determine an identity of the attachment unit via a data link (114) which is able to be established between the vehicle and the attachment unit; and
wherein the attachment unit recognition apparatus (109) is embodied to read the dimension of the attachment unit from the memory device (110) by means of the determined identity of the attachment unit.

5. Surround-view system (111) according to one of the preceding claims, wherein the attachment unit recognition apparatus (109) is embodied to detect the attachment unit by recognizing, by means of the camera (105), objects that move jointly with the vehicle and to determine the dimensions (112, 113) thereof.

6. Surround-view system (111) according to one of the preceding claims, wherein the surround-view system includes a plurality of cameras (102, 103, 104, 105, 106) for producing a plurality of camera data of an environment of the vehicle (201);
wherein the control device is embodied to produce the image from the plurality of camera data; and
wherein the attachment unit recognition apparatus (109) is embodied to select, upon detection of the attachment unit, a lower number of cameras (102, 103, 104, 105) from the plurality of cameras.

7. Surround-view system (111) according to one of the preceding claims,
wherein the attachment unit recognition apparatus (109) is embodied to detect removal of the attachment unit (101); and
wherein the control device (108) is embodied to produce, in the case of the removal of the attachment unit, the image without the dimension of the attachment unit from the camera data.

8. Vehicle (100), including a surround-view system (111) according to one of the preceding claims.

9. Method for displaying an image of an environment of a vehicle, the method including the steps of:
producing camera data of the environment of the vehicle (S2);
producing an image from the camera data; and
displaying the image (S4), **characterized by** the further steps of:
automatically detecting and determining a dimension of an attachment unit upon mounting of the attachment unit to the vehicle (S1);
adapting the field of view of the image taking into consideration the dimension (112, 113) of the detected attachment unit (101).

## Revendications

1. Système de vue environnante (111) pour un véhicule (100), le système de vue environnante comportant :
une caméra (102, 103, 104, 105, 106) destinée à générer des données de caméra d'un environnement du véhicule ;
un moyen de commande (108) destiné à générer une image à partir des données de caméra ;
un moyen d'affichage (107) destiné à afficher l'image ;
dans lequel le moyen de commande est conçu pour générer l'image à partir des données de caméra, **caractérisé en ce que** le système de vision environnante (111) comprend en outre :
un dispositif de détection d'appareil de montage (109) ;
dans lequel le dispositif de détection d'appareil de montage est conçu, lors du montage d'un appareil de montage (101) sur le véhicule, pour détecter automatiquement l'appareil de montage et déterminer une dimension (112, 113) de l'appareil de montage ;
et **en ce que** le moyen de commande est conçu, dans le but de générer l'image, pour adapter un champ de visualisation de l'image lors de la détection de l'appareil de montage en tenant compte de la dimension (112, 113) déterminée de l'appareil de montage (101).

2. Système de vue environnante (111) selon la revendication 1, dans lequel le moyen de commande (108) est conçu pour insérer un modèle (202) du véhicule dans l'image ; et
dans lequel le moyen de commande est conçu, lors de la détection de l'appareil de montage, pour insérer un modèle (300, 400) de l'appareil de montage dans l'image en tenant compte de la dimension de l'appareil de montage.

3. Système de vue environnante (111) selon l'une des revendications précédentes,
dans lequel le dispositif de détection d'appareil de montage (109) comprend un moyen à mémoire (110) dans lequel est stockée la dimension de l'appareil de montage ; et
dans lequel le dispositif de reconnaissance d'appareil de montage (109) est conçu, lors de la détection de l'appareil de montage, pour lire la dimension de l'appareil de montage à partir du moyen à mémoire (110).

4. Système de vue environnante (111) selon la revendication 3, dans lequel une dimension d'une pluralité d'appareils de montage différents est respectivement stockée dans le moyen à mémoire (110) ;
dans lequel le dispositif de reconnaissance d'appareil de montage (109) est conçu pour déterminer une identité de l'appareil de montage par l'intermédiaire d'une liaison de données (114) pouvant être établie entre le véhicule et l'appareil de montage ; et
dans lequel le dispositif de reconnaissance d'appareil de montage (109) est conçu pour lire la dimension de l'appareil de montage à partir du moyen à mémoire (110) au moyen de l'identité déterminée de l'appareil de montage.

5. Système de vue environnante (111) selon l'une des revendications précédentes,
dans lequel le dispositif de détection d'appareil de montage (109) est conçu pour détecter l'appareil de montage en détectant au moyen de la caméra (105) des objets qui se déplacent avec le véhicule et pour déterminer leur dimension (112, 113).

6. Système de vue environnante (111) selon l'une des revendications précédentes,
dans lequel le système de vue environnante comprend une pluralité de caméras (102, 103, 104, 105, 106) destinées à générer une pluralité de données de caméra d'un environnement du véhicule (201) ;
dans lequel le moyen de commande est conçu pour générer l'image à partir de la pluralité de données de caméra ; et
dans lequel le dispositif de reconnaissance d'appareil de montage (109) est conçu pour sélectionner un nombre plus faible de caméras (102, 103, 104, 105) parmi la pluralité de caméras lors de la détection de l'appareil de montage.

7. Système de vue environnante (111) selon l'une des revendications précédentes,
dans lequel le dispositif de détection d'appareil de montage (109) est conçu, lors du démontage de l'appareil de montage, pour détecter un démontage de l'appareil de montage (101) ; et dans lequel le moyen de commande (108) est conçu pour générer l'image sans la dimension de l'appareil de montage à partir des données de caméra.

8. Véhicule (100) comprenant un système de vue environnante (111) selon l'une des revendications précédentes.

9. Procédé d'affichage d'une image d'un environnement d'un véhicule, le procédé comprenant les étapes consistant à :
générer des données de caméra de l'environnement du véhicule (S2) ;
générer une image à partir des données de caméra ; et
afficher l'image (S4), **caractérisé par** les étapes consistant à :
détecter et déterminer automatiquement une dimension d'un appareil de montage lorsque l'appareil de montage est monté sur le véhicule (S1) ;
adapter le champ de vision de l'image en tenant compte de la dimension (112, 113) de l'appareil de montage détecté (101).
